# FASCICULE DE BREVET EUROPEEN

(11) **EP 0 521 188 B1**
(45) Date de publication et mention de la délivrance du brevet: **02.11.1995**
(21) Numéro de dépôt: 91111211.8
(22) Date de dépôt: 05.07.1991
(51) Int. Cl.: A47J 31/40

(54) **Dispositif permettant l'extraction de cartouches**
Gerät zum Extrahieren von Kartuschen
Device for extracting cartridges

(43) Date de publication de la demande: 07.01.1993
(73) Titulaire: SOCIETE DES PRODUITS NESTLE S.A., 1800 Vevey (CH)
(72) Inventeur: Fond, Olivier, CH-1400 Yverdon (CH); Yoakim, Alfred, CH-1814 La Tour-de-Peilz (CH)

(56) Documents cités:
- WO-A-86/02537
- CH-A- 458 099
- CH-A- 605 293
- DE-U- 8 908 315
- FR-A- 1 566 089
- US-A- 2 899 886

## Description

L'invention concerne un dispositif permettant l'extraction de cartouches et adaptable sur une machine à café espresso du commerce.

Le brevet CH 458099 concerne un dispositif pour la préparation d'une boisson. Ce système permet d'extraire des capsules ouvertes contenant du café soluble et n'est donc pas un moyen permettant une extraction du type espresso. Le document décrit une porte cartouch faisant partie intégrante du dispositif et ayant des pattes de serrage et une pièce collectrice de l'eau. On peut dire la même chose du brevet WO 86/02537 qui concerne une machine a café dans laquelle on extrait des cartouches sans aucune montée en pression.

L'usage ordinaire des machines à café de type espresso correspond à l'extraction de café moulu qui a été dosé et disposé préalablement dans un filtre métallique maintenu dans une cuillère.

La partie supérieure des machines à café de type espresso est composée d'une douche permettant l'arrosage du café, d'une bague de serrage pour la fixation de la cuillère et d'un joint de caoutchouc assurant l'étanchéité et une bonne extraction en forçant le passage de l'eau à travers le lit de café.

Néanmoins, l'utilisation est fastidieuse source de souillures et de frustration car la qualité de la boisson obtenue n'est pas toujours à la hauteur des espérances. Il est en effet difficile de doser correctement le café et de trouver sa bonne mouture.

L'emploi de capsules de café par exemple celles faisant l'objet du brevet CH 605,293 est une bonne alternative car les manipulations sont simplifiées la qualité du café est meilleure et constante et les risques de salissures sont réduits. Néanmoins l'utilisation de capsules de café exige une parfaite adéquation entre la capsule et le dispositif d'extraction, essentiellement pour des questions d'étanchéité et afin de forcer le passage de l'eau à travers le lit de café.

Cette adaptation peut être prévue dès la construction de la machine mais dans ce cas la machine ne permet en général d'employer que des capsules.

Le but de la présente invention est de proposer un dispositif complet qui permet d'extraire des capsules de café sur toutes les machines espresso sans exiger aucun changement de celles-ci.

Le dispositif selon l'invention permet d'extraire aussi bien des capsules tronconiques inversées que des capsules tronconiques.

Dans la présente description, si on parle de cuillère pour la machine espresso normale, on parlera de support de porte-cartouche pour désigner le même objet s'agissant d'extraction de cartouches (ou capsules) tronconiques inversées. Par contre, pour l'extraction de capsules tronconiques on parlera pour cette pièce de porte-cartouche.

L'invention concerne un dispositif permettant l'extraction de cartouches fermées tronconiques inversées et adaptable sur une machine à café espresso comprenant un support de porte-cartouche comportant une poignée et des pattes de serrage adaptées à la bague de serrage et aux rampes de serrage de la machine, un porte-cartouche logé dans ledit support de porte-cartouche et une pièce collectrice de l'eau montée à pivotement sur la poignée du support de porte-cartouche et rabattable sur le bord supérieur du porte-cartouche et comportant une grille de répartition d'eau présentant sur sa face inférieure des éléments saillants pour perforer la face supérieure de la cartouche ou une simple ouverture avec des éléments saillants portés par des axes solidaires de ladite pièce collectrice, ou comportant une plaque avec en son centre une aiguille d'injection d'eau ledit porte-cartouche et ladite pièce collectrice de l'eau ménageant entre eux une cavité dont la forme est adaptée à la forme extérieure de la cartouche à extraire et ledit porte-cartouche comportant aussi sur sa partie inférieure des éléments saillants et en creux sur une grille d'écoulement ou un pointeau central avec éventuellement des ailettes radiales.

L'invention concerne également un dispositif permettant l'extraction de cartouches fermées tronconiques et adaptable sur une machine à café espresso, comprenant un porte-cartouche comportant une poignée et des pattes de serrage adaptées à la bague de serrage et aux rampes de serrage de la machine et une pièce collectrice de l'eau montée à pivotement sur la poignée du porte-cartouche et rabattable sur la bordure inférieure du logement du porte-cartouche et comportant un grille de répartition d'eau présentant sur sa face inférieure des éléments saillants pour perforer la face supérieure de la cartouche ou une simple ouverture avec des éléments saillants portés par des axes solidaires de ladite pièce collectrice, ou comportant une plaque avec en son centre une aiguille d'injection d'eau, ledit porte-cartouche et ladite pièce collectrice de l'eau ménageant entre eux une cavité dont la forme est adaptée à la forme extérieure de la cartouche à extraire et ledit porte-cartouche comportant aussi sur sa partie inférieure des éléments saillants et en creux sur une grille d'écoulement ou un pointeau central avec éventuellement des ailettes radiales.

Comme déjà mentionné ci-dessus le dispositif selon l'invention est utilisable avec toute machine à café espresso du commerce. Ces machines présentent une grille de répartition d'eau maintenue par une vis creuse et peuvent présenter sur leur périphérie un rebord métallique. Ces machines comportent en outre entourant la grille de répartition d'eau et surélevé par rapport à celle-ci un joint de la tête d'extraction de la machine. La pièce collectrice d'eau doit assurer l'étanchéité d'une part contre le joint de la tête d'extraction et d'autre part contre le rebord de la cartouche en coopérant avec le rebord supérieur dudit porte-cartouche (s'agissant de l'extraction de cartouches tronconiques inversées) ou contre le rebord de la cartouche en coopérant avec la bordure inférieure du logement du porte-cartouche (cartouches tronconiques).

Pour assurer une parfaite étanchéité le serrage doit être exercé depuis le porte-cartouche qui vient appuyer contre la pièce collectrice d'eau et qui transmet cette poussée contre le joint de la tête d'extraction de la machine, par l'intermédiaire des pattes de serrage du porte-cartouche.

Un joint positionné dans une gorge, peut être intercalé entre les parties coopérantes du porte-cartouche et de la pièce collectrice d'eau. Ce joint est disposé, soit à la partie inférieure de la pièce collectrice, soit à la partie supérieure du porte-cartouche (capsules tronconiques inversées).

La pièce collectrice d'eau peut être simplement posable sur le porte-cartouche.

La pièce collectrice d'eau peut aussi être solidaire du support de porte-cartouche mais elle doit impérativement rester mobile en hauteur afin de ne pas compromettre le serrage et l'étanchéité, comme cela a été vu ci-dessus.

Le pivotement de la pièce collectrice d'eau par rapport à la poignée peut être assurée par tout moyen connu par exemple à l'aide d'une roue dentée ou d'un système d'ergots.

Dans ce cas, la pièce collectrice peut présenter alors deux ergots verticaux, à cheval sur la poignée du support de porte-cartouche ou du porte-cartouche. Ces ergots ont deux ouvertures ovoïdes dans le sens de la hauteur. Un axe, traversant horizontalement la poignée, permet de rendre cette pièce collectrice solidaire horizontalement de la poignée mais lui laisse une petite liberté de mouvement dans le sens vertical.

Afin de favoriser les manipulations de la cartouche vis à vis du porte-cartouche, la pièce collectrice d'eau peut présenter un ergot, manipulable avec le pouce de la main de l'opérateur qui tient la poignée du support de porte-cartouche ou du porte-cartouche, et faisant au repos un angle de 20 à 70 avec l'horizontale. En rabattant à l'horizontale cet ergot, on soulève la pièce collectrice et l'on peut ainsi manipuler la cartouche (mise en place ou dégagement). La pièce collectrice d'eau peut aussi être liée à un ressort de rappel, fixé sur la poignée, qui permet de rabattre, une fois l'ergot ci-dessus dégagé, cette pièce collectrice sur le porte-cartouche.

La pièce collectrice d'eau doit être dimensionnée de telle manière qu'elle puisse venir serrer contre le joint de la tête d'extraction sans être gênée par la grille de répartition d'eau ou la tête d'extraction de la machine, sans toutefois laisser trop de volume libre entre elle et la tête d'extraction, ce volume se remplissant d'eau à chaque extraction et pouvant se répandre lors du desserrage du dispositif après extraction de la capsule.

Le porte-cartouche peut être indépen- dant/amovible du support de porte-cartouche ou faire partie intégrante de celui-ci (non amovible). Dans ce cas, on considère que le support de porte-cartouche correspond à l'extérieur de la pièce commune tandis que le porte-cartouche correspond essentiellement à l'intérieur de cette pièce en vis-à-vis de la cartouche.

La cartouche utilisée dans le dispositif selon l'invention peut être celle faisant l'objet de la demande de brevet européen No. 91107650.3. On peut aussi utiliser les capsules faisant l'objet des demandes de brevet EP No. 90114404.8 et 90114405.5.

La cartouche utilisée pour la mise en oeuvre du procédé selon l'invention peut aussi être choisie parmi celles faisant l'objet des demandes de brevet européen déposées par la demanderesse, le même jour que la présente demande, sous les titres "Emballage rigide et procédé de fabrication", " Emballage souple avec élément rigidifiant et procédé de fabrication" et "Embllage souple ouvert et procédé de fabrication".

Elle a un diamètre compris entre 2.5 et 6 cm et une épaisseur de lit de café comprise entre 10 et 25 mm.

Si la capsule est ouverte préalablement à l'extraction, la pièce collectrice d'eau présente dans la zone coopérant avec la face supérieure de la capsule de multiples perforations ou une simple ouverture permettant à l'eau de transiter depuis la grille de répartition d'eau de la machine jusque dans la capsule. De même, le porte-cartouche dispose à sa partie inférieure d'une simple grille d'écoulement coopérant avec la paroi inférieure de la cartouche.

Si l'on parle de capsules fermées dont la qualité réside dans le fait qu'elles s'ouvrent automatiquement au moment de l'extraction, simplifiant à l'extrême les manipulations et assurant la qualité ultime par protection du café contre l'oxygène jusqu'au dernier instant avant l'extraction, il faut bien mettre en place le dispositif qui assurera cette ouverture. L'ouverture doit être double: sur la face supérieure afin de permettre l'introduction d'eau et sur la face inférieure pour assurer l'évacuation du café extrait.

Pour ouvrir la face supérieure de la capsule, la pièce collectrice d'eau sera constituée d'une grille de répartition d'eau pourvue, sur sa face inférieure, de quelques pointes, lames ou croix saillantes qui déchireront la paroi supérieure de la capsule. Ces éléments saillants peuvent être verticaux ou légèrement orientés de manière à augmenter la surface des déchirures opérées sur les capsules.

Dans une autre forme de réalisation, la grille de répartition d'eau de la pièce collectrice d'eau comporte une simple ouverture avec des éléments saillants portés par des axes radiaux solidaires de ladite pièce collectrice.

L'eau passera sans problèmes dans la capsule puisque, sous l'effet de la pression d'eau, la membrane supérieure, de nature souple, pourra fléchir légèrement et libérer ainsi les ouvertures réalisées par les éléments saillants.

Ces éléments saillants sont constitués de pointes tronconiques, d'une hauteur de 2 à 7 mm, et d'un diamètre moyen de 2 à 5 mm, ou de petites lames ou croix, d'une hauteur de 2 à 7 mm, d'une section de 1 à 3 mm, légèrement taillées en crête.

Ces éléments, au nombre de 3 à 10, sont répartis sur la face inférieure de la pièce collectrice d'eau dans la zone correspondant au diamètre intérieur supérieur du corps de la cartouche.

Une autre solution pour l'ouverture de la face supérieure de la capsule consiste à prévoir sur la pièce collectrice de l'eau une plaque avec en son centre une aiguille d'injection d'eau, par exemple du type tel que décrit dans la demande de brevet européen No. 90114402.2 du 27 juillet 1990.

L'ouverture de la face inférieure peut être réalisée à l'aide du procédé et une partie du dispositif, objet de la demande de brevet européen No. 91107462.3. Il s'agit, en effet, d'adapter le dispositif constitué d'ailettes saillantes placées sur la grille d'écoulement du porte-cartouche.

L'ouverture de la face inférieure peut aussi être réalisée avec le dispositif objet des demandes de brevet EP No. 90114401.4 et 90114403.0, c'est-à-dire avec un porte-cartouche comportant à sa partie inférieure un pointeau central avec éventuellement des ailettes radiales.

La suite de la description est faite en référence aux dessins sur lesquels:
Fig. 1 est une représentation schématique de la tête d'extraction et de la bague de serrage d'une machine espresso standard.
Fig. 2 est une représentation schématique de la tête d'extraction et de la bague de serrage d'une machine espresso standard selon une autre configuration.
Fig. 3 est une coupe de la cartouche à extraire et du dispositif selon l'invention et
Fig. 4 est une coupe selon la ligne IV-IV de la Fig. 3.
Fig. 5 est une coupe du dispositif selon l'invention selon un second mode de réalisation et
Fig. 6 est une coupe du dispositif selon l'invention selon un troisième mode de réalisation.

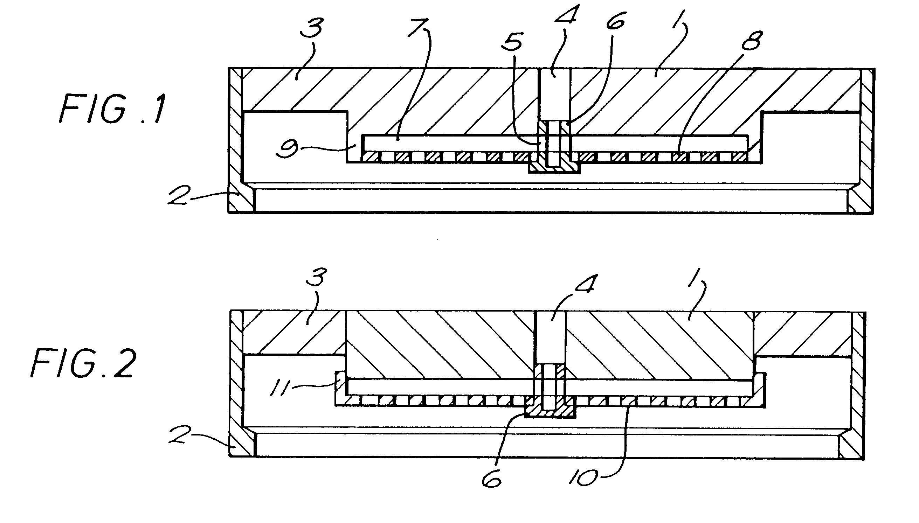

La Fig. 1 représente une tête d'extraction (1) classique de machine type espresso. Elle comporte une bague de serrage (2) de la cuillère (non représentée). Le joint (3) assure l'étanchéité lors de l'extraction. L'eau arrive par le canal (4) et passe par les orifices (5) de la vis creuse (6) pour se répandre dans la chambre (7). Elle passe ensuite à travers la grille de répartition d'eau (8) pour s'écouler sous forme de douche sur le lit de café non représenté. La grille (8) est engagée dans un logement cylindrique (9) de la tête d'extraction.

La Fig. 2 montre une seconde forme de réalisation de la tête d'extraction. Les mêmes éléments ont été affectés des mêmes no. de référence que la Fig. 1. Dans ce cas la grille (10) présente un rebord métallique (11).

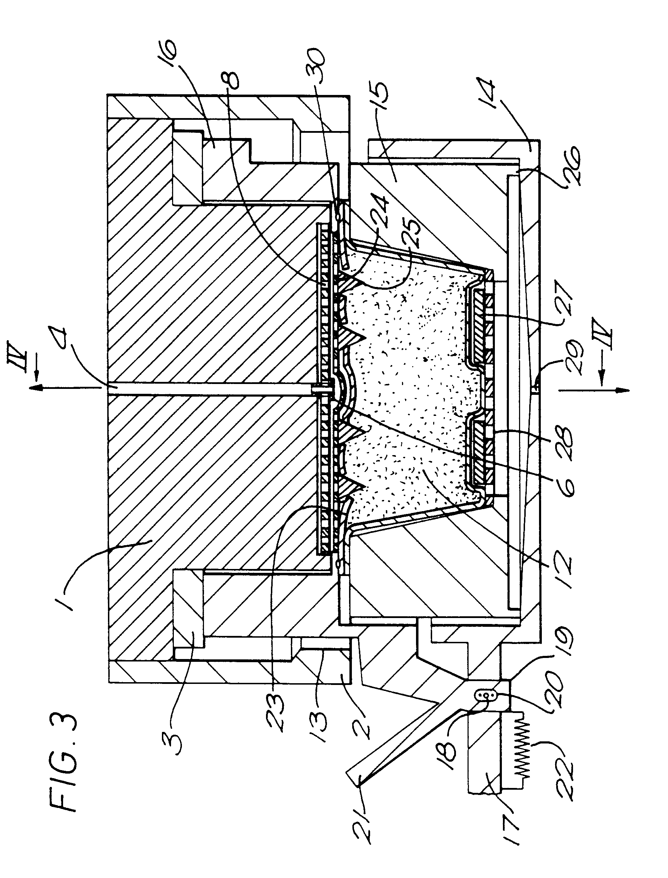

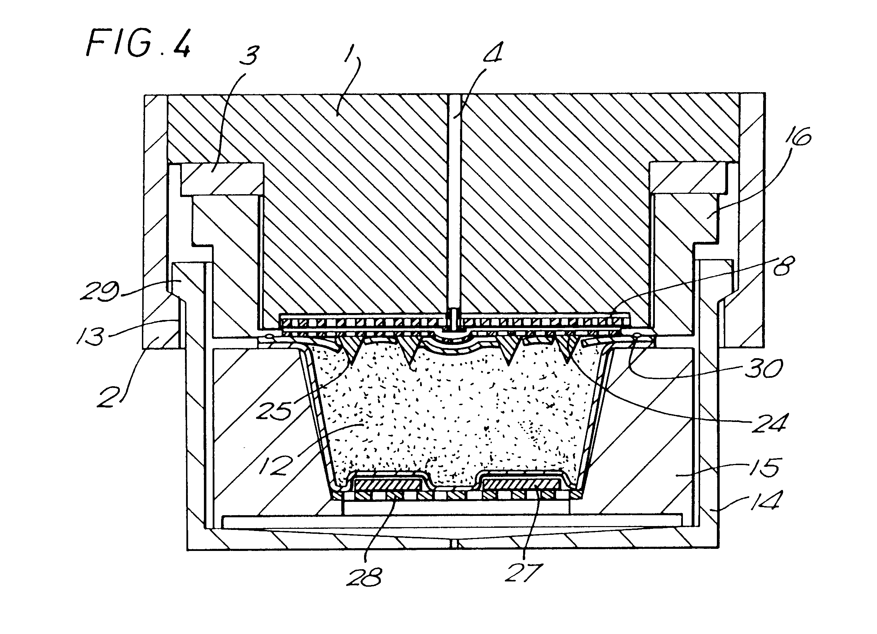

Les Fig. 3 et 4 représentent le dispositif selon l'invention pour l'extraction d'une cartouche fermée tronconique inversée (12) avec la tête d'extraction selon la Fig. 1. Ce dispositif comprend un support de porte-cartouche (14) avec poignée (17), un porte-cartouche (15) logé dans ledit support (14) et une pièce collectrice de l'eau (16). Cette pièce collectrice (16) est montée à rotation sur la poignée (17) et est maintenue en place grâce à un écrou (18). La pièce collectrice chevauche par des prolongements (19) la poignée (17). Ces prolongements ont des ouvertures ovoïdes (20) dans le sens de la hauteur. L'écrou (18), traversant horizontalement la poignée (17), permet de rendre la pièce collectrice (16) solidaire de la poignée, mais les ouvertures ovoïdes (20) lui laissent une liberté de mouvement dans le sens vertical. Cette liberté est nécessaire pour garantir le serrage et l'étanchéité du dispositif selon l'invention. Il est prévu sur la pièce collectrice (16) un ergot (21) manipulable avec un doigt de la main de l'opérateur pour soulever la pièce collectrice de manière à pouvoir mettre en place ou enlever la cartouche (12). Le bas du prolongement (19) est lié à un ressort de rappel (22) fixé sur la poignée, permettant un retour automatique de la pièce collectrice (16) sur le porte-cartouche (15). La pièce collectrice (16) comprend en outre en regard de la face supérieure (23) de la cartouche à extraire une grille de passage d'eau (24) et sous cette grille des éléments saillants (25) permettant de percer ladite face supérieure (23). Le porte-cartouche (15) appuie sur le support (14) grâce à une protubérance annulaire (26). Il comporte en outre sur son fond des éléments saillants (27) permettant l'ouverture de la cartouche et une grille d'écoulement (28).

Le fonctionnement du dispositif est le suivant: on dégage l'ensemble porte-cartouche (15), support (14) et pièce collectrice (16) de la tête d'extraction, on soulève la pièce (16) avec le doigt grâce à l'ergot (21) et on enlève la cartouche usagée, on remet une nouvelle cartouche à extraire (12) et le ressort de rappel (22) rabat la pièce (16) sur le porte-cartouche (15). On engage cet ensemble par ses pattes de verrouillage (29) sur les rampes de verrouillage (13) de la bague de serrage (2). Les éléments saillants (25) percent la face supérieure de la cartouche et le joint (30) garantira une bonne étanchéité lors de l'extraction. On peut alors démarrer l'extraction. L'eau arrive par le canal (4) passe à travers les grilles (8) de la tête d'extraction et (24) de la pièce collectrice (16) et diffuse dans la cartouche (12) par les trous pratiquées par les éléments saillants (25). La face inférieure de la cartouche (12) appuie contre les éléments saillants (27), ladite face inférieure se déchirant à l'endroit de ces éléments saillants en atteignant sa tension de rupture. Le café s'écoule alors par l'orifice (29) du support de porte-cartouche dans un récipient non représenté.

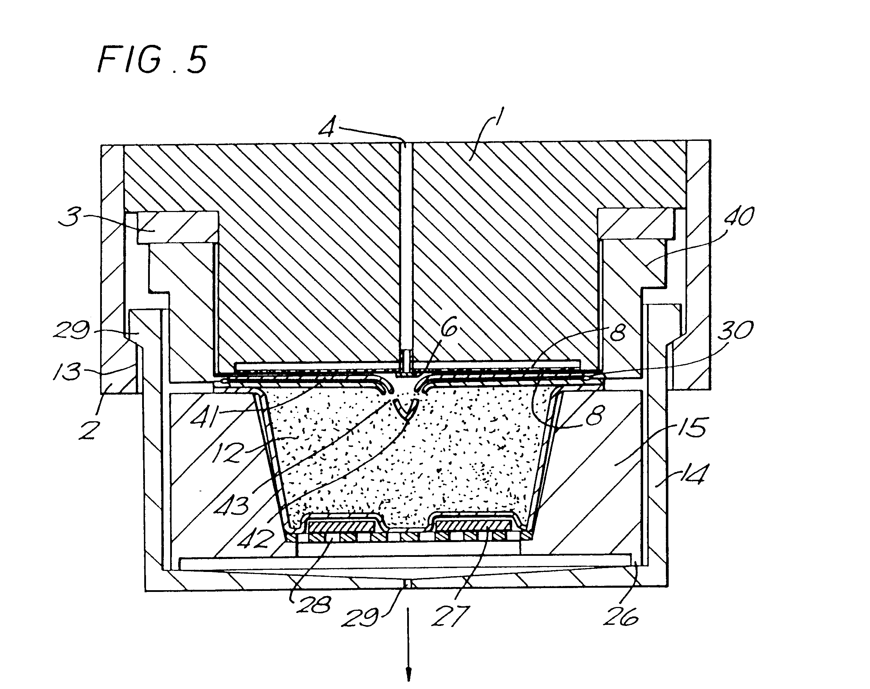

Sur la Fig. 5, on a affecté les mêmes éléments des mêmes no. de référence que les Fig. 3 et 4. La coupe est faite comme pour la Fig. 4, c'est-à-dire qu'elle ne fait pas apparaître l'ergot pour soulever la pièce collectrice de l'eau. La seule différence par rapport aux Fig. 3 et 4 réside dans la pièce collectrice de l'eau (40) qui au lieu de présenter une grille de passage d'eau comporte une plaque (41) au centre de laquelle est disposée une aiguille d'injection d'eau (42).

Le fonctionnement du dispositif est similaire à celui des Fig. 3 et 4. On introduit la cartouche (12) dans le porte-cartouche (15). On rabat la pièce (40) sur le porte-cartouche, l'aiguille d'injection d'eau (42) perçant la face supérieure de la cartouche (12). On engage l'ensemble sur les rampes de verrouillage (13) de la bague de serrage (2). On peut ainsi démarrer l'extraction. L'eau arrive par le canal (4), passe à travers la grille (8) et comme la plaque (41) est fermée, est forcée à revenir par les ouvertures (43) de l'aiguille d'injection d'eau (42). Sous l'effet de la pression de l'eau, la face inférieure de la cartouche (12) appuie contre les éléments saillants (27), ladite face inférieure se déchirant à l'endroit de ces éléments saillants en atteignant sa tension de rupture. Le café s'écoule sur la grille d'écoulement (28) par l'orifice (29) du support de porte-cartouche

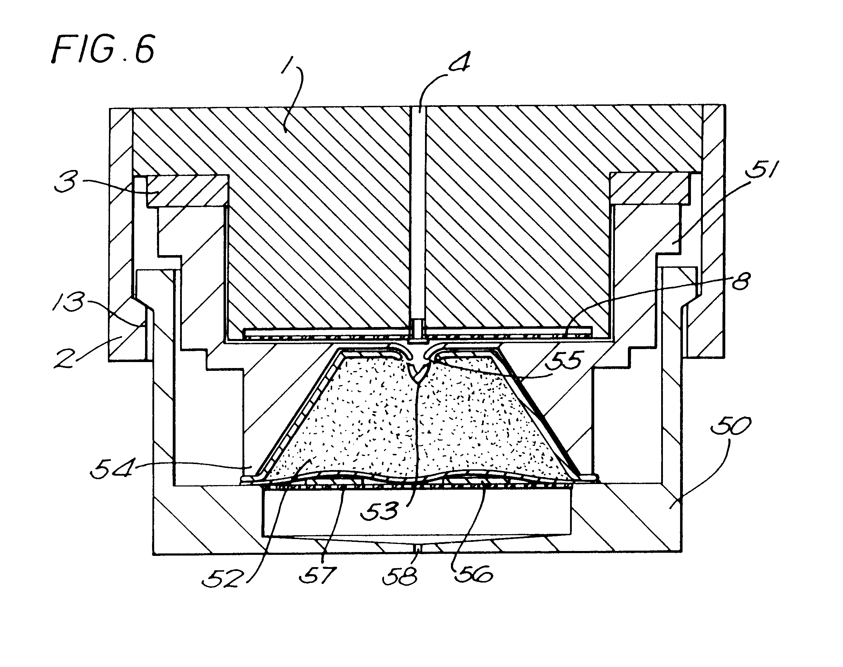

La Fig. 6 est une coupe dans le même plan que les Fig. 4 et 5. Cette figure concerne le dispositif selon l'invention pour l'extraction de cartouches tronconiques. La seule similarité avec les Fig. 3 à 5 porte sur la tête d'extraction (1). Il est inutile de décrire plus précisément cette tête. Le dispositif comprend un porte-cartouche (50) et une pièce collectrice de l'eau (51). Cette pièce est montée à rotation sur le porte-cartouche comme précisé sur la Fig. 3. La pièce collectrice (51) comprend en regard de la face supérieure de la cartouche à extraire (52) une aiguille d'injection d'eau (53) et se prolonge vers le bas pour délimiter un logement pour la cartouche (52). Cette partie inférieure (54) appuie sur le fond du logement du porte-cartouche (50).

On opère de la manière suivante: on introduit la cartouche dans le porte-cartouche (50) et on rabat la pièce collectrice de l'eau (51). L'aiguille d'injection (53) perce la face supérieure de la cartouche. On peut alors démarrer l'extraction. L'eau arrive par le canal (4), passe sur la grille (8) et est forcée à passer par les ouvertures (55) de l'aiguille d'injection (53) sur le lit de café. Sous l'effet de la montée en pression, la face inférieure de la cartouche (52) appuie contre les éléments saillants (56), ladite face inférieure se déchirant à l'endroit de ces éléments saillants en atteignant sa tension de rupture. Le café s'écoule sur la grille (57) à travers l'orifice (58) du porte-cartouche dans un récipient non représenté.

L'intérêt du dispositif selon l'invention est qu'il permet d'opérer sur une machine espresso connue et disponible dans le commerce. Il suffit d'acheter le dispositif selon l'invention adapté au type de capsule qu'on souhaite extraire.

## Revendications

1. Dispositif permettant l'extraction de cartouches fermées et adaptable sur une machine à café espresso comprenant un support de porte-cartouche (14) comportant une poignée (17) et des pattes de serrage adaptées à la bague de serrage (2) et aux rampes de serrage (13) de la machine, un porte-cartouche (15) logé dans ledit support de porte-cartouche et une pièce collectrice de l'eau (16) montée à pivotement sur la poignée (17) du support de porte-cartouche et rabattable sur le bord supérieur du porte-cartouche et comportant une grille de répartition d'eau (24) présentant sur sa face inférieure des éléments saillants (25) pour perforer la face supérieure de la cartouche ou une simple ouverture (43) avec des éléments saillants portés par des axes solidaires de ladite pièce collectrice, ou comportant une plaque (41) avec en son centre une aiguille d'injection d'eau (42) ledit porte-cartouche (15) et ladite pièce collectrice de l'eau (16) ménageant entre eux une cavité dont la forme est adaptée à la forme extérieure de la cartouche à extraire et ledit porte-cartouche comportant aussi sur sa partie inférieure des éléments saillants (27) et en creux sur une grille d'écoulement (28) ou un pointeau central avec éventuellement des ailettes radiales.

2. Dispositif permettant l'extraction de cartouches fermées et adaptable sur une machine à café espresso comprenant un porte-cartouche (50) comportant une poignée et des pattes de serrage adaptées à la bague de serrage (2) et aux rampes de serrage (13) de la machine, et une pièce collectrice de l'eau (51) montée à pivotement sur la poignée du porte-cartouche et rabattable sur la bordure inférieure du logement du porte-cartouche et comportant un grille de répartition d'eau (24) présentant sur sa face inférieure des éléments saillants (25) pour perforer la face supérieure de la cartouche ou une simple ouverture (43) avec des éléments saillants portés par des axes solidaires de ladite pièce collectrice, ou comportant une plaque (41) avec en son centre une aiguille d'injection d'eau (42) ledit porte-cartouche et ladite pièce collectrice de l'eau (51) ménageant entre eux une cavité dont la forme est adaptée à la forme extérieure de la cartouche à extraire et ledit porte-cartouche comportant aussi sur sa partie inférieure des éléments saillants (27) et en creux sur une grille d'écoulement (28) ou un pointeau central avec éventuellement des ailettes radiales.

3. Dispositif selon l'une des revendications 1 ou 2 caractérisé en ce que la liaison (18) de la pièce collectrice d'eau (16) et de la poignée (17) du support de porte-cartouche leur permet une certaine mobilité relative.

## Claims

1. A device for the extraction of sealed cartridges which is designed to fit onto an espresso coffee machine, comprising a cartridge holder support (14) with a handle (17) and retaining flanges adapted to the retaining collar (2) and to the retaining ramps (13) of the machine, a cartridge holder (15) arranged in the cartridge holder support and a water collector (16) which is pivotally mounted on the handle (17) of the cartridge holder support, which is designed to be pressed back onto the upper edge of the cartridge holder and which comprises a water distributing grill (24) comprising projecting elements (25) on its lower face to perforate the upper face of the cartridge or a single opening (43) with projecting elements supported by pins integral with the water collector or a plate (41) with a water injection needle (42) at its centre, the cartridge holder (15) and the water collector (16) between them forming a cavity of which the shape is adapted to the outer shape of the cartridge to be extracted and the cartridge holder also comprising on its lower part relief and recessed elements (27) on a flow grill (28) or a central needle optionally with radial fins.

2. A device for the extraction of sealed cartridges which is designed to fit onto an espresso coffee machine, comprising a cartridge holder (50) support with a handle and retaining flanges adapted to the retaining collar (2) and to the retaining ramps (13) of the machine and a water collector (51) which is pivotally mounted on the handle of the cartridge holder, which is designed to be pressed back onto the lower border of the recess of the cartridge holder and which comprises a water distributing grill (24) comprising projecting elements (25) on its lower face to perforate the upper face of the cartridge or a single opening (43) with projecting elements supported by pins integral with the water collector or a plate (41) with a water injection needle (42) at its centre, the cartridge holder and the water collector (51) between them forming a cavity of which the shape is adapted to the outer shape of the cartridge to be extracted and the cartridge holder also comprising on its lower part relief and recessed elements (27) on a flow grill (28) or a central needle optionally with radial fins.

3. A device as claimed in claim 1 or 2, characterized in that the connection (18) of the water collector (16) and the handle (17) of the cartridge holder support allows them a certain relative mobility.

## Patentansprüche

1. Vorrichtung, die das Extrahieren von geschlossenen Kartuschen ermöglicht und für eine Espresso-Kaffeemaschine verwendbar ist, mit einem Kartuschenhalterträger (14), der einen Griff (17) und Spannklauen aufweist, die an den Spannring (2) und Spannrampen (13) der Maschine adaptiert sind, mit einem Kartuschenhalter (15), der in dem Kartuschenhalterträger angeordnet ist, und mit einem Wasser-Sammelteil (16), das drehbar an dem Griff (17) des Kartuschenhalterträgers angebracht ist und auf den oberen Rand des Kartuschenhalters absenkbar ist, und das ein Gitter (24) zum Verteilen von Wasser enthält, das auf seiner Unterseite vorstehende Elemente (25) zum Perforieren der Oberseite der Kartusche oder eine einfache Öffnung (43) mit vorstehenden Elementen aufweist, die durch Achsen getragen sind, die zu dem Sammelteil gehören, oder das eine Scheibe (41) mit einer Nadel (42) in ihrem Zentrum zum Einspritzen von Wasser enthält, wobei der Kartuschenhalter (15) und das Wasser-Sammelteil (16) einen Hohlraum zwischen sich aussparen, dessen Form an die äußere Form der zu extrahierenden Kartusche angepaßt ist, und wobei der Kartuschenhalter auf seinem unteren Teil auch vorstehende Elemente (27) und Vertiefungen auf einem Ablaufgitter (28) oder einen zentralen Stift eventuell mit radialen Stegen aufweist.

2. Vorrichtung, die das Extrahieren von geschlossenen Kartuschen ermöglicht und für eine Espresso-Kaffeemaschine verwendbar ist, mit einem Kartuschenhalter (50), der einen Griff und Spannklauen aufweist, die an einen Spannring (2) und Spannrampen (13) der Maschine adaptiert sind, und mit einem Wasser-Sammelteil (51), das drehbar an dem Griff des Kartuschenhalters angebracht ist und auf den unteren Rand des Sitzes des Kartuschenhalters absenkbar ist und ein Gitter (24) zum Verteilen von Wasser enthält, das auf seiner Unterseite vorstehende Elemente (25) zum Perforieren der Oberseite der Kartusche oder eine einfache Öffnung (43) mit vorstehenden Elementen aufweist, die durch Achsen getragen sind, die zu dem Sammelteil gehören, oder das eine Scheibe (41) mit einer Nadel (42) in ihrem Zentrum zum Einspritzen von Wasser enthält, wobei der Kartuschenhalter und das Wasser-Sammelteil (51) einen Hohlraum zwischen sich aussparen, dessen Form an die äußere Form der zu extrahierenden Kartusche angepaßt ist, und wobei der Kartuschenhalter auf seinem unteren Teil auch vorstehende Elemente (27) und Vertiefungen auf einem Ablaufgitter (28) oder einen zentralen Stift eventuell mit radialen Stegen aufweist.

3. Vorrichtung nach einem der Ansprüche 1 oder 2, dadurch gekennzeichnet, daß die Verbindung (18) des Wasser-Sammelteils (16) und des Griffs (17) des Kartuschenhalterträgers eine gewisse Relativbewegung zwischen diesen ermöglicht.
